# EUROPÄISCHE PATENTSCHRIFT

(11) **EP 3 499 865 B1**
(45) Veröffentlichungstag und Bekanntmachung des Hinweises auf die Patenterteilung: **28.02.2024**
(21) Anmeldenummer: 18209092.8
(22) Anmeldetag: 29.11.2018
(51) Int. Cl.: G06V 10/147, G06V 40/12, G06V 40/70, H04N 23/55

(54) **VORRICHTUNG UND VERFAHREN ZUM MESSEN VON BILDDATEN**
DEVICE AND METHOD FOR MEASURING IMAGE DATA
DISPOSITIF ET PROCÉDÉ DE MESURE DES DONNÉES D'IMAGE

(30) Priorität: 18.12.2017 DE 102017130298
(43) Veröffentlichungstag der Anmeldung: 19.06.2019
(73) Patentinhaber: Bundesdruckerei GmbH, 10969 Berlin (DE)
(72) Erfinder: Fischer, Jörg, 10317 Berlin (DE); Kraus, Micha, 10827 Berlin (DE); Waldmüller, Jens, 12621 Berlin (DE); Paeschke, Manfred, 16352 Wandlitz (DE)
(74) Vertreter: Bittner, Thomas L.

(56) Entgegenhaltungen:
- EP-A1- 1 420 359
- EP-A1- 1 498 838
- DE-A1-102004 011 960
- SHOGENJI R ET AL: "BIMODAL FINGERPRINT CAPTURING SYSTEM BASED ON COMPOUND-EYE IMAGING MODULE", APPLIED OPTICS, OPTICAL SOCIETY OF AMERICA, WASHINGTON, DC; US, Bd. 43, Nr. 6, 20. Februar 2004 (2004-02-20), Seiten 1355-1359, XP001193878, ISSN: 0003-6935, DOI: 10.1364/AO.43.001355

## Beschreibung

Die Erfindung betrifft eine Vorrichtung und ein Verfahren zum Messen von Bilddaten, aus denen biometrische Daten bestimmbar sind.

### Hintergrund

Um eine biometrische Bestimmung vorzunehmen, werden üblicherweise Sensorsignale mithilfe einer Sensoreinrichtung erfasst, aus denen Bilddaten erzeugt werden, die die biometrische Bestimmung ermöglichen. Beispielsweise werden Bilddaten erzeugt, die für eine Fingerabdruckanalyse oder eine Gesichtserkennung auswertbar sind.

Im Dokument US 5,734,154 ist eine sogenannte Smart Card beschrieben, bei der in den Kartenkörper ein Mikrochip, eine Bildanzeige und elektronische Komponenten integriert sind, die mit der Bildanzeige verbunden sind, um Bilddaten für die Anzeige zu liefern.

Im Dokument US 7,039,221 B1 ist ein Bildverifikationssystem zur Gesichtserkennung offenbart, bei dem eine Videokamera und ein Video-Digitalisierer im Kartenkörper einer Smartcard angeordnet sind.

Das Dokument DE 196 47 154 A1 offenbart eine Vorrichtungen und ein Verfahren zur Herstellung von Oberflächenstrukturen, wie beispielsweise Linsenstrukturen, auf einem Datenträger. Offenbarte Vorrichtungen vermeiden Verwölbungen des Datenträgers umlaufende Phasen am Rand von Prägewerkzeugen. Ferner wird ein Verfahren zur nachträglichen Beseitigung von Verwölbungen vorgeschlagen. Hierbei wird der Datenträger einem nachträglichen Rückbiege- und/oder Wärmebehandlungsschritt unterzogen.

In dem Dokument DE 10 2012 014 877 A1 ist ein tragbarer Datenträger mit einer Anzeigeeinrichtung und einem integrierten Schaltkreis, der die Anzeigeeinrichtung steuert, insbesondere eine Chipkarte mit Display, offenbart. Über der Anzeigeeinrichtung ist eine Linsenstruktur angeordnet, deren optische Eigenschaften in dem integrierten Schaltkreis gespeichert sind. In dem integrierten Schaltkreis ist ein Raster bzw. ein Algorithmus gespeichert, mit dem ein darzustellendes Bild so in Einzelelemente zerlegt wird, dass bei Wiedergabe der Einzelelemente auf der Anzeigeeinrichtung das Bild nur unter definierten Betrachtungswinkeln sichtbar ist. Der integrierte Schaltkreis steuert die Anzeigeeinrichtung in Abhängigkeit von der optischen Geometrie der Linsenstruktur an.

Das Dokument DE 10 2013 010 941 A1 offenbart ein Sicherheitselement für Sicherheitspapiere, Wertdokumente oder Ausweiskarten, das aus einer rasterartigen Anordnung von fokussierenden optischen Elementen besteht. Jedes der fokussierenden optischen Elemente weist einen Brennpunkt oder eine Brennlinie auf, sodass die rasterartige Anordnung von fokussierenden optischen Elementen Abbildungselemente erkennbar abbildet, die sich im Brennpunkt oder der Brennlinie der fokussierenden optischen Elemente befinden. Die Lage der Brennpunkte oder der Brennlinien der fokussierenden optischen Elemente ist in Bezug auf die Abbildungselemente durch Einwirkung äußerer Einflüsse beeinflussbar. Die äußeren Einflüsse sind beispielsweise mechanischer Druck und/oder Änderung der Temperatur und/oder ein elektrischer Strom und/oder ein elektromagnetisches Feld. Diese Beeinflussung führt dazu, dass die Abbildungselemente, die sich zuvor außerhalb der Brennpunkte oder Brennlinien der fokussierenden optischen Elemente befanden, nach Einwirkung der äußeren Einflüsse im Brennpunkt oder der Brennlinie mindestens eines fokussierenden optischen Elements angeordnet sind. Alternativ oder zusätzlich führt die Beeinflussung dazu, dass die Abbildungselemente, die sich zuvor im Brennpunkt oder in der Brennlinie mindestens eines fokussierenden optischen Elements befanden, nach Einwirkung der äußeren Einflüsse außerhalb des Brennpunkts oder der Brennlinie der fokussierenden optischen Elemente angeordnet sind.

In dem Dokument US 2007 0 109 438 A1 ist ein digitales Bilderkennungssystem mit einer minimalen Baulänge von weniger als einem Millimeter beschrieben. Das Bilderkennungssystem umfasst dabei ein Mikrolinsen-Array, ein Detektor-Array und optional ein Pinhole-Array. Die Funktionsweise des Bilderkennungssystems basiert auf einer separaten Abbildung unterschiedlicher Raumwinkelabschnitte des Objektraums mittels einer Vielzahl paralleler optischer Kanäle. Die optischen Achsen der einzelnen optischen Kanäle weisen dabei unterschiedliche Neigungen auf, sodass sie eine Funktion des Abstandes des optischen Kanals von der Mitte der auf das Bild ausgerichteten Seite des Bilderkennungssystems darstellen, wodurch das Verhältnis der Größe des Sichtfeldes zur Bildfeldgröße gezielt bestimmt werden kann. Hierbei werden Detektoren mit einer so hohen Empfindlichkeit verwendet, dass die Detektoren einen großen Abstand mit einer kleinen aktiven Oberfläche haben.

Das Dokument US 2009 / 0 083 847 A1 offenbart ein elektronisches Gerät mit einem eingebetteten Authentifizierungssystem zum Beschränken des Zugriffs auf Geräteressourcen. Das Authentifizierungssystem kann einen oder mehrere Sensoren umfassen, die dazu dienen, biometrische Informationen eines Benutzers zu erfassen. Die Sensoren können in der Vorrichtung so positioniert sein, dass die Sensoren geeignete biometrische Informationen erkennen können, wenn der Benutzer die Vorrichtung bedient, ohne dass der Benutzer einen Schritt zum Bereitstellen der biometrischen Informationen durchführen muss (z. B. Einbetten eines Fingerabdrucksensors in einen Eingabemechanismus anstelle des Bereitstellens eines Fingerabdrucksensors in einem separaten Teil des Vorrichtungsgehäuses). In einigen Ausführungsformen kann das Authentifizierungssystem so arbeiten, dass es ein visuelles oder zeitliches Eingabemuster erkennt, um einen Benutzer zu authentifizieren. Als Reaktion auf die Authentifizierung kann ein Benutzer auf beschränkte Dateien, Anwendungen oder Einstellungen zugreifen.

In dem Dokument US 2013 / 0 088 780 A1 ist ein Verfahren und eine Vorrichtung zum Bereitstellen einer ersten Lichtleitstruktur und einer zweiten Lichtleitstruktur zum Empfangen eines optischen Eingangsstrahls und zum Ausgeben eines optischen Ausgangsstrahls, die von einem Benutzer betrachtet werden sollen, beschrieben. Zumindest eine der ersten oder der zweiten Lichtleitstruktur hat eine nicht flache Form. Die erste und die zweite Lichtleitstruktur sind so konfiguriert, dass sie virtuelle Bilder mit unterschiedlichen Betrachtungsabständen erzeugen.

Das Dokument US 2016 / 0 147 987 A1 offenbart ein Verfahren und ein elektronisches Gerät zur Durchführung einer Authentifizierung auf der Basis von Biometrie. Das elektronische Gerät kann Erfassungsdaten durch Erfassen eines zu authentifizierenden Ziels erfassen. Das elektronische Gerät kann Merkmalsinformationen aus den Erfassungsdaten berechnen. Die elektronische Vorrichtung kann bestimmen, ob die berechneten Merkmalsinformationen und die gespeicherten registrierten Informationen miteinander übereinstimmen, indem sie ein dynamisches Übereinstimmungsschema verwendet, bei dem ein Abgleich zwischen den Merkmalsinformationen und den registrierten Informationen gemäß einem Zustand des elektronischen Geräts variabel durchgeführt wird. Wenn die Merkmalsinformation und die registrierte Information auf der Grundlage eines Ergebnisses der Bestimmung miteinander übereinstimmen, kann das elektronische Gerät ein Ereignis für den Authentifizierungserfolg erzeugen.

Das Dokument US 2017 / 0 124 932 A1 offenbart ein mobiles Gerät mit einem Lichtsensor, der unter einer Anzeige (z. B. einem Touchscreen) angeordnet ist. Das mobile Gerät kann einen Befehl zum Erfassen eines Bildes identifizieren. Das mobile Gerät kann zumindest einen Zielabschnitt eines für die Opazität einstellbaren Bereichs der Anzeige direkt über dem Lichtsensor einstellen. Der einstellbare Bereich kann sich von im Wesentlichen opak zu im Wesentlichen transparent erstrecken. Das mobile Gerät kann das Bild unter Verwendung mindestens des Lichtsensors erfassen, während der Zielabschnitt des einstellbaren Bereiches für die Opazität im Wesentlichen transparent ist.

Im Artikel Shogenji et al. (2004), Bimodal fingerprint capturing system based on compoundeye imaging module, Applied Optics 43 (6), wird ein kompaktes Abbildungssystem (Thin Observation Module by Bound Optics) vorgeschlagen, bei dem ein Mikrolinsen-Array für eine dünne Hardware-Konfiguration verwendet wird. Ein Fingerabdruckerfassungsmodul als eine Anwendung wird beschrieben. Experimentelle Ergebnisse werden bereitgestellt, um die Anwendbarkeit auf die Fingerabdruckerfassung zu verdeutlichen. Verschiedene Typen der Biometrie, d.h. Fingerabdruck- und Gesichtsbilder, werden von derselben Hardware erfasst.

Im Dokument DE 10 2004 011960 A1 werden ein Verfahren, ein tragbarer Datenträger und ein System zur Authentisierung eines Benutzers eines tragbaren Datenträgers, der einen biometrischen Sensor und eine Steuereinheit aufweist, gegenüber dem tragbaren Datenträger offenbart. Der Benutzer wird zum Bereitstellen biometrischer Information für den biometrischen Sensor aufgefordert. Der biometrische Sensor wird beleuchtet und die bereitgestellte biometrische Information durch den biometrischen Sensor erfasst. Die erfasste biometrische Information wird durch die Steuereinheit ausgewertet, wobei der Schritt des Aufforderns des Benutzers durch den Schritt des Beleuchtens des biometrischen Sensors erfolgt.

Das Dokument EP 1 420 359 A1 betrifft einen Fingerabdrucksensor mit einem Sensorkörper mit einer ersten Sensorfläche zum Erfassen eines ersten Fingerabdrucks und mit einer zweiten Sensorfläche zum Erfassen eines zweiten Fingerabdrucks, wobei die erste Sensorfläche und die zweite Sensorfläche in einem Winkel aus dem Winkelbereich von 135 bis 225° zueinander angeordnet sind, und mit einer mit mindestens der ersten oder der zweiten Sensorfläche in Wirkverbindung stehenden Weiterleiteinrichtung zum Weiterleiten eines erfassten Fingerabdrucks zumindest an eine Auswerteeinrichtung zur Auswertung des erfassten Fingerabdrucks.

Im Dokument EP 1 498 838 A1 ist ein Verfahren zur automatischen Verifikation der Identität einer Person durch Vergleich eines aktuell sensorisch aufgenommenen biometrischen Merkmals der Person mit einem biometrischen Datensatz einer vorherigen Merkmalsaufnahme offenbart, der aus einem Identitätsdokument aufgezeichnet als Barcode, gespeichert in einem Chip oder Transponder ausgelesen wird. Zur Erhöhung der Erkennungssicherheit, insbesondere zur Reduzierung fälschlich negativer Verifizierung, ist vorgesehen, dass die biometrischen Datensätze einer Mehrzahl von vorherigen Merkmalsaufnahmen, die unter unterschiedlichen Aufnahmebedingungen aufgenommen wurden, aus dem Identitätsdokument ausgelesen und jeweils mit den aktuell aufgenommenen biometrischen Merkmalsdaten verglichen werden und jeweils ein Übereinstimmungsmaß berechnet wird, und dass die Identität als verifiziert festgestellt wird, wenn wenigstens das höchste Übereinstimmungsmaß oberhalb eines vorgegebenen Schwellenwertes liegt.

### Zusammenfassung

Aufgabe der Erfindung ist es, eine verbesserte Technologie in Verbindung mit dem Erfassen von Bilddaten für die biometrische Bestimmung anzugeben, bei der Daten zur biometrischen Auswertung auf flexible Art und Weise in verschiedenen Anwendungsfällen erfasst werden.

Zur Lösung sind eine Vorrichtung und ein Verfahren zum Messen von Bilddaten, aus denen biometrische Daten bestimmbar sind, nach den unabhängigen Ansprüchen 1 und 10 geschaffen. Ausgestaltungen sind Gegenstand von abhängigen Ansprüchen.

Nach einem Aspekt ist eine Vorrichtung zum Messen von Bilddaten, aus denen biometrische Daten bestimmbar sind, geschaffen. Die Vorrichtung weist ein biometrisches Sensorsystem mit einer Sensoreinrichtung, bei der einer Sensorfläche eine flächige Anordnung von optischen Elementen vorgelagert ist, und eine Verarbeitungseinrichtung auf, die mit der Sensoreinrichtung verbunden und eingerichtet ist, von der Sensoreinrichtung erfasste Sensorsignale zu empfangen und hieraus Bilddaten zu erzeugen, aus denen biometrische Daten zum Identifizieren wenigstens einer Person bestimmbar sind. Die Verarbeitungseinrichtung ist eingerichtet, erste Sensorsignale zu empfangen und hieraus erste Bilddaten zu erzeugen, aus denen erste biometrische Daten für ein erstes biometrisches Merkmal bestimmbar sind, wobei die ersten Sensorsignale für einen ersten Körperabschnitt erfassbar sind, der in einem Fokusabstand vor der flächigen Anordnung von optischen Elementen oder benachbart zum Fokusabstand angeordnet ist; und zweite Sensorsignale zu empfangen und hieraus zweite Bilddaten zu erzeugen, aus denen zweite biometrische Daten für ein zweites biometrisches Merkmal bestimmbar sind, wobei die zweiten Sensorsignale für einen zweiten Körperabschnitt erfassbar sind, der in einem Nichtfokusabstand vor der flächigen Anordnung von optischen Elementen, welcher kürzer als der Fokusabstand ist, oder auf der flächigen Anordnung aufliegend angeordnet ist, und die Sensoreinrichtung eingerichtet ist, durch die flächige Anordnung von optischen Elementen hindurch die zweiten Sensorsignale zu erfassen, die ein Gesamtbild des zweiten Körperabschnitts anzeigen, wodurch ein Erfassen der zweiten Bilddaten für eine unscharfe Abbildung erfolgt.

Nach einem weiteren Aspekt ist ein Verfahren zum Messen von Bilddaten geschaffen, aus denen biometrische Daten bestimmbar sind. Das Verfahren weist die folgenden schritte auf: Bereitstellen eines biometrischen Sensorsystems mit einer Sensoreinrichtung, bei der einer Sensorfläche eine flächige Anordnung von optischen Elementen vorgelagert ist, und einer Verarbeitungseinrichtung, die mit der Sensoreinrichtung verbunden und eingerichtet ist, von der Sensoreinrichtung erfasste Sensorsignalen zu empfangen und hieraus Bilddaten zu erzeugen, aus denen biometrische Daten bestimmbar sind; und Erfassen von Sensorsignalen und Erzeugen von Bilddaten aus den Sensorsignalen, aus denen biometrische Daten zum Identifizieren wenigstens einer Person bestimmbar sind, mittels des biometrischen Sensorsystems. Die Verarbeitungseinrichtung ist eingerichtet, erste Sensorsignale zu empfangen und hieraus erste Bilddaten zu erzeugen, aus denen erste biometrische Daten für ein erstes biometrisches Merkmal bestimmbar sind, wobei die ersten Sensorsignale für einen ersten Körperabschnitt erfasst werden, der in einem Fokusabstand vor der flächigen Anordnung von optischen Elementen oder benachbart zum Fokusabstand angeordnet ist; und zweite Sensorsignale zu empfangen und hieraus zweite Bilddaten zu erzeugen, aus denen zweite biometrische Daten für ein zweites biometrisches Merkmal bestimmbar sind, wobei die zweiten Sensorsignale für einen zweiten Körperabschnitt erfasst werden, der in einem Nichtfokusabstand vor der flächigen Anordnung von optischen Elementen, welcher kürzer als der Fokusabstand ist, oder auf der flächigen Anordnung aufliegend angeordnet ist, und die Sensoreinrichtung eingerichtet ist, durch die flächige Anordnung von optischen Elementen hindurch die zweiten Sensorsignale zu erfassen, die ein Gesamtbild des zweiten Körperabschnitts anzeigen, wodurch ein Erfassen der zweiten Bilddaten für eine unscharfe Abbildung erfolgt.

Mithilfe der vorgeschlagenen Technologie ist es ermöglicht, verschiedene Sensorsignale für biometrisch zu bestimmende Körperabschnitte zu erfassen, die in unterschiedlichem Abstand zu dem biometrischen Sensorsystem, insbesondere in unterschiedlichem Abstand zu der flächigen Anordnung von optischen Elementen, angeordnet sind. Sensorsignale werden erfasst, wenn ein biometrisch zu bestimmender Körperabschnitt im Bereich des Fokus der optischen Elemente oder außerhalb des Fokus angeordnet ist. Die Verarbeitungseinrichtung des biometrischen Sensorsystems ist eingerichtet, in den verschiedenen Anwendungssituationen der Sensorsignalerfassung Bilddaten zu erzeugen, die für die biometrische Bestimmung auswertbar sind.

Die Sensoreinrichtung kann mit einem flächigen Bildsensor, der zum Beispiel ein Pixel-Array aufweist, ausgeführt sein. Mittels der Kombination von Sensorfläche und vorgelagerter flächiger Anordnung von optischen Elementen ermöglicht die Sensoreinrichtung das Erfassen von zu Bilddaten verarbeitbaren Sensorsignalen, wenn der Körperabschnitt im Fokusbereich oder außerhalb des Fokusbereichs angeordnet ist. Der Fokus oder Brennpunkt ist der Punkt der optischen Elemente, in dem sich die Abbildungsstrahlen schneiden, die parallel zur optischen Achse einfallen. Der Fokusbereich erfasst hierbei den Fokus sowie einen Toleranzbereich um den Fokus, innerhalb dessen für die jeweilige Anwendung noch ausreichend "scharfe" Abbildungen mittels der Sensorfläche aufgenommen werden. Das Anordnen des Körperabschnitts außerhalb des Fokus(-Bereichs), aber benachbart hierzu, hat zur Folge, dass ein oder mehrere unscharfe Bilder erfasst werden, aus denen (dennoch) die zweiten biometrischen Daten für das zweite biometrische Merkmal bestimmbar sind.

In Verbindung mit der Anordnung von optischen Elementen bilden die den optischen Elementen jeweils zugeordneten Brennpunkte (Fokus) eine Fokusebene, die im Fokus (Fokusabstand) der Anordnung von optischen Elementen angeordnet ist. Die optischen Elemente weisen jeweils eine feste Brennweite auf.

Die optischen Elemente weisen jeweils eine feste Brennweite auf, wobei die Brennweite für alle optischen Elemente gleich sein kann. Alternativ können in der flächigen Anordnung optische Elemente mit unterschiedlicher fester Brennweite zum Einsatz kommen.

Das (optische) Auflösungsvermögen des flächigen Bildsensors kann höher sein als das der flächigen Anordnung von optischen Elementen. Die flächige Anordnung kann ein Auflösungsvermögen von etwa 150 bis etwa 600 dpi aufweisen. Die Auflösung des flächigen Bildsensors kann zum Beispiel wenigstens viermal höher als die der flächigen Anordnung von optischen Elementen. Die von flächiger Anordnung und Bildsensor erfasste Fläche kann zum Beispiel zwischen etwa 1 und etwa 4 Quadratzentimetern betragen.

Auf diese Weise werden mit ein und demselben biometrischen Sensorsystem zur biometrischen Bestimmung auswertbare Bilddaten für unterschiedliche biometrische Merkmale erfasst, zum Beispiel für eine Fingerabdruckanalyse, eine Gesichtserkennung und / oder eine Iriserkennung.

Bei der Sensoreinrichtung ist der Sensorfläche eine flächige Anordnung von optischen Linsen vorgelagert sein, denen im Fokusabstand eine Fokuseben zugeordnet ist. Die flächige Anordnung von optischen Linsen kann beispielsweise mit einem Mikrolinsenarray gebildet sein.

Ein Fokusabstand der flächigen Anordnung von optischen Elementen kann etwa 50cm bis etwa 70cm betragen. In einer Ausführungsform kann der Fokusabstand (Brennpunkt) für die optischen Elemente etwa 60 cm betragen. Die verschiedenen Ausführungsformen weisen einen Fokusabstand für die optischen Elemente auf, der etwa einer Armlänge entspricht, so dass ein Mensch die Vorrichtung zum Messen von Bilddaten für die biometrische Erkennung nach Art eines sogenannten "Selfies" von sich entfernt halten und mit für die biometrische Erkennung ausreichender Bildschärfe erfasst werden kann.

Die Verarbeitungseinrichtung kann weiter eingerichtet sein, aus den ersten Sensorsignalen erste Bilddaten zu erzeugen, aus denen als erste biometrische Daten Gesichtsbiometrie-Daten bestimmbar sind. Bei dieser Ausführungsform können die ersten Bilddaten für eine Gesichtserkennung ausgewertet werden. Alternativ oder ergänzend kann vorgesehen sein, dass die ersten Bilddaten für eine Iriserkennung auswertbar sind. Werden die ersten Bilddaten zum Bestimmen erster und die zweiten Bilddaten zum Bestimmen zweiter biometrischer Daten ausgewertet, so ist in den verschiedenen Ausführungsformen hierdurch ein Verfahren zum biometrischen Bestimmen wenigstens einer Person realisierbar, beispielsweise zur Personenidentifizierung oder -authentisierung.

Die Verarbeitungseinrichtung kann weiter eingerichtet sein, aus den zweiten Sensorsignalen zweite Bilddaten zu erzeugen, aus denen als zweite biometrische Daten Fingerabdruck-Daten bestimmbar sind. Bei dieser Ausführungsform ist mit der Sensoreinrichtung ein Fingerabdrucksensor bereitgestellt, sodass eine biometrische Bestimmung mittels Fingerabdruck ermöglicht ist. Hierzu wird der zu bestimmende Finger zum Beispiel auf die von der Sensorfläche abgewandte Oberfläche der flächigen Anordnung von optischen Elementen aufgelegt oder hierzu benachbart davorgehalten.

Zumindest die Sensoreinrichtung kann in einem Identitätsdokument angeordnet sein. Hierbei ist die Sensoreinrichtung in das Identitätsdokument integriert, zum Beispiel einen Personalausweis, einen Reisepass, einen Mitarbeiterausweis, eine Bankkarte oder ein anderes Ausweisdokument oder dergleichen. Alternativ oder ergänzend kann die Sensoreinrichtung in einen mobiler Träger integriert sein, zum Beispiel einen Token. Auch eine Integration in ein sogenanntes "wearable" kann vorgesehen sein, zum Beispiel in Form eines Rings, eines Armbands oder einer Brosche. Wearables können als tragbarer Computer verstanden werden, die so klein sind, dass sie beispielweise am Körper getragen werden können, zum Beispiel als Armband und Brille, oder in Kleidung eingearbeitet werden können. So können zum Beispiel auch medizinische Geräte, welche dauerhaft oder über einen längeren Zeitraum am Körper, zum Beispiel am Arm getragen, werden, als Gerät aus dem Bereich Wearable Computing bezeichnet werden. Es besteht eine große Vielfalt der Endgeräte und der Anwendungsgebiete.

Die Verarbeitungseinrichtung kann ergänzend vollständig oder zum Teil in das Identitätsdokument integriert sein. Im Übrigen gelten die vorangehenden Erläuterungen zur Integration der Sensoreinrichtung im Zusammenhang mit der Verarbeitungseinrichtung entsprechend.

Zumindest die Sensoreinrichtung kann in einem Kunststoffkartenkörper, insbesondere einem Kunststoffkartenkörper im ID-1-Format gemäß ISO 7810vom November 2003, angeordnet sein.

Die flächige Anordnung von optischen Elementen kann in den Kunststoffkartenkörper einlaminiert sein. Hierbei sind die Sensorfläche sowie die flächige Anordnung von optischen Elementen in den Kunststoffkartenkörper integriert, indem diese bei der Herstellung des Kunststoffkartenkörpers in die aufeinander laminierten Kunststofffolienschichten integriert werden. Zum Beispiel kann die flächige Anordnung von optischen Elementen mithilfe von Mikrolinsen ausgebildet sein, die mittels Laminieren bei der Herstellung des Kunststoffkartenkörpers hierin eingebracht werden. Um die flächige Anordnung von optischen Elementen in den Kartenkörper zu integrieren, kann beispielweise vorgesehen sein, eine äußere Kunststofffolienschicht zu erweichen und mittels eines strukturierten Laminierwerkzeugs, beispielsweise eines strukturierten Laminierblechs, mit einer Negativform abzuformen, sodass dann die flächige Anordnung von optischen Elementen in den Kunststoffkartenkörper integriert werden kann, insbesondere formschlüssig. Die Kunststofffolienschichten können beispielsweise aus einem Polymermaterial bestehen, zum Beispiel Polycarbonat.

Mittels der flächigen Anordnung von optischen Elementen können, wenn der erste Körperabschnitt im Fokusabstand oder benachbart hierzu vor der flächigen Anordnung von optischen Elementen angeordnet ist, Teilbildbereiche des ersten Körperabschnitts auf die Sensorfläche abgebildet werden, und die Verarbeitungseinrichtung kann eingerichtet sein, aus den ersten Sensorsignalen, die die Teilbildbereiche anzeigen oder repräsentieren, als erste Bilddaten ein Gesamtbild des ersten Körperabschnitts zu erzeugen. Bei dieser Ausführungsform ist die Sensoreinrichtung eingerichtet, Sensorsignale für Teilbildbereiche zu detektieren, die von der flächigen Anordnung von optischen Elementen auf die Sensorfläche abgebildet werden, um hieraus ein Gesamtbild des ersten Körperabschnitts zu bestimmen. Wenn einem Element oder alternativ eine Gruppe von Elementen der Sensorfläche (zum Beispiel Pixel) ein einzelnes optisches Element zugeordnet ist, erfasst das Element oder die von Elementen der Sensorfläche ein einzelnes Teilbild. Beispielsweise kann eine solche Verfahrensgestaltung in Verbindung mit einer Gesichtsbiometrie-Bestimmung genutzt werden, wenn das zu bestimmende Gesicht im Fokusabstand oder benachbart hierzu in Bezug auf die flächige Anordnung von optischen Elementen der Sensorfläche gegenüberliegend angeordnet ist. Ausgehend vom bereitgestellten Gesamtbild kann dann die biometrische Bestimmung durchgeführt werden.

Die Sensoreinrichtung kann eingerichtet sein, wenn der erste oder der zweite Körperabschnitt im Nichtfokusabstand, insbesondere einem Abstand geringer als der Fokusabstand, oder auf der flächigen Anordnung aufliegend angeordnet ist, durch die flächige Anordnung von optischen Elementen hindurch die zweiten Sensorsignale zu erfassen, die ein Gesamtbild des ersten oder des zweiten Körperabschnitts anzeigen. Bei dieser Ausführungsform kann eine 1:1-Abbildung des Körperabschnitts auf die Sensorfläche erfolgen. Die Sensorsignalerfassung erfolgt für das Gesamtbild des Körperabschnitts durch die optischen Elemente der flächigen Anordnung hindurch, wobei der zu bestimmende Körperabschnitt außerhalb des Fokusbereiches der optischen Elemente angeordnet ist. Hierdurch erfolgt das Erfassen der zweiten Bilddaten für eine unscharfe Abbildung, beispielsweise einen unscharfen Abdruck des oder der Finger für eine Fingerabdruckbestimmung.

Die verwendete Verarbeitungseinrichtung ist weiter eingerichtet, aus den ersten Bilddaten die ersten biometrischen Daten und aus den zweiten Bilddaten die zweiten biometrischen Daten zu bestimmen. Bei dieser Ausführungsform ist die Verarbeitungseinrichtung selbst oder wahlweise in Kombination mit einer an die Verarbeitungseinrichtung dauerhaft oder zeitweise zumindest zur Datenübertragung drahtlos oder kabelgebunden koppelnden Auswerteeinrichtung eingerichtet, die biometrischen Daten aus den Bilddaten zu bestimmen. Die ersten und die zweiten biometrischen Daten betreffen unterschiedliche biometrische Merkmale einer oder verschiedener Personen (biometrische Personenmerkmale), beispielsweise unterschiedliche biometrische Merkmale für ein und dieselbe Person. Es ist so ein Verfahren zum Bestimmen von biometrischen Daten ausführbar. Bei dieser oder anderen Ausführungsformen können die biometrischen Daten zum Beispiel für eine Personenidentifizierung oder - authentifizierung verwendet werden. Ausgehend von den bestimmten biometrischen Merkmalen können in einer möglichen Ausführungsform personengebundene Steuersignale in der Verarbeitungseinrichtung selbst und / oder in der hieran koppelnden Auswerteeinrichtung erzeugt werden. Beispielsweise kann so ein Zugriff auf eine Speichereinrichtung personengebunden gesteuert werden, also in Abhängigkeit von der biometrischen Bestimmung. Die Speichereinrichtung kann dauerhaft oder zeitweise zumindest zur Datenübertragung mit der Verarbeitungseinrichtung verbunden sein.

Die verwendete Verarbeitungseinrichtung kann weiter eingerichtet sein, unter Verwendung der ersten und / oder der zweiten biometrische Daten eine Person zu identifizieren. Sind die biometrischen Daten bestimmt, können diese für eine Personenidentifizierung genutzt werden, beispielsweise dadurch, dass die bestimmten biometrischen Daten mit biometrischen Vergleichsdaten verglichen werden.

Der erste und / oder der zweite Körperabschnitt kann beim Erfassen der Sensorsignale mittels einer Lichtquelle beleuchtet werden. Die Lichtquelle oder Beleuchtungseinrichtung kann eingerichtet sein, eine Beleuchtung des Körperabschnitts durch die Sensoreinrichtung hindurch und / oder an dieser seitlich vorbei zu ermöglichen. In einer Ausgestaltung kann an der Sensoreinrichtung ein umlaufendes Ringlicht vorgesehen sein, um den Körperabschnitt zu beleuchten, beispielsweise einen Fingerabschnitt.

In Verbindung mit dem Verfahren zum Messen von Bilddaten, aus denen biometrische Daten bestimmbar sind, können die vorangehend im Zusammenhang mit der Vorrichtung erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung eines Abschnitts eines Identitätsdokuments mit einem biometrischen Sensorsystem im Querschnitt in einer ersten Anwendungssituation; und
- Fig. 2: die Anordnung aus Fig. 1 in einer zweiten Anwendungssituation.

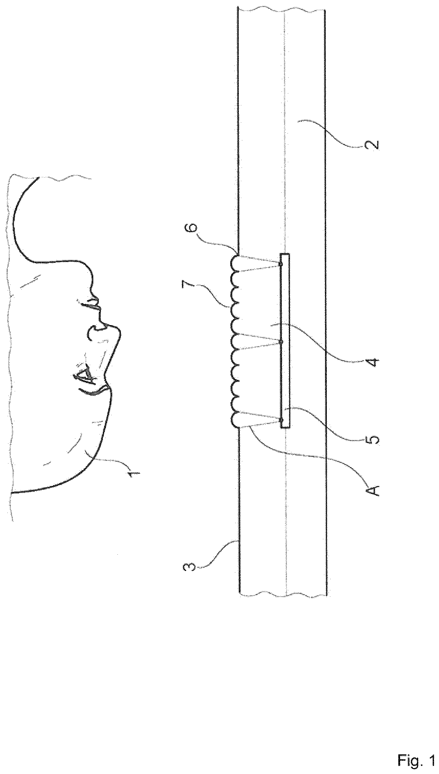

Fig. 1 zeigt eine schematische Darstellung einer Anordnung mit einem biometrisch zu bestimmenden Objekt- oder Körperabschnitt 1, im gezeigten Beispiel ein Gesicht, und einem Abschnitt eines Identitätsdokuments 2. Das im Querschnitt dargestellte Identitätsdokument 2 weist einen Schichtaufbau 3 auf. In den Schichtaufbau 3 ist ein biometrisches Sensorsystem 4 integriert. Bei dem Schichtaufbau 3 handelt es sich beispielsweise um aufeinander laminierte Schichten (Kunststofffolienschichten) eines Kunststoffkartenkörpers, der für ein Sicherheits- oder ein Identitätsdokument nutzbar ist, zum Beispiel einen Ausweis oder ein anderes Identitätsdokument.

Das biometrische Sensorsystem 4 ist in den Schichtaufbau 3 integriert und weist eine Sensorfläche 5 auf, der eine flächige Anordnung von optischen Elementen 6 vorgelagert ist. Die Sensorfläche 5 ist zum Beispiel mit einem Array von Pixeln gebildet. Die flächige Anordnung von optischen Elementen 6 ist beispielhaft mit einer Anordnung von Mikrolinsen 7 gebildet. Der Abstand zwischen den optischen Elementen 6 und der Sensorfläche 5 ist vorzugsweise so gering, dass jeden Abschnitt der Sensorfläche 5 nur Licht von einem einzigen zugeordneten optischen Element 6 erreicht, zum Beispiel von einer zugeordneten einzelnen Mikrolinse in der flächigen Anordnung von optischen Elementen 6. Hierzu kann eine optische Abschottung zwischen den optischen Elementen 6 mittels "Sichtschutzbarrieren" vorgesehen sein.

Bei der Darstellung in Fig. 1 ist das biometrisch zu bestimmende Gesicht der flächigen Anordnung von optischen Elementen 6 gegenüber in einem Abstand angeordnet, der in etwa dem Fokusbereich der optischen Elemente 6 entspricht. Das Gesicht wird mittels der flächigen Anordnung von optischen Elementen 6 auf die Sensorfläche 5 abgebildet, derart, dass mehrere Teilbilder auf die Sensorfläche 5 abgebildet werden, was in Fig. 1 mittels Hilfslinien A schematisch gezeigt ist. Über jedes optische Element 6 wird ein Teilbild abgebildet. Mittels der Sensorfläche 5 werden Sensorsignale erfasst, die die Teilbilder anzeigen oder repräsentieren. Mit Hilfe einer folgenden datentechnischen Auswertung und Verarbeitung der Sensorsignale werden die Teilbilder zu einem Gesamtbild zusammengesetzt, welches zur biometrischen Bestimmung des Gesichts ausgewertet werden kann. Eine Prozessoreinrichtung (nicht dargestellt), wahlweise kombiniert mit einer Speichereinrichtung, mit der die Sensorsignale zum Bestimmen des Gesamtbilds verarbeitbar sind, kann in das Identitätsdokument 2 integriert sein, beispielweise vergleichbar einer Smart Card mit Prozessoreinheit. Alternativ oder ergänzend kann die Verarbeitung der Sensorsignale zumindest zum Teil mittels einer Prozessoreinrichtung außerhalb des Identitätsdokuments 2 ausgeführt werden, wobei die Sensorsignale und / oder aus einer Teilverarbeitung der Sensorsignale abgeleitete Daten über eine drahtlose Schnittstelle und / oder eine kontaktbehaftete Schnittstelle zur externen Prozessoreinrichtung übertragen werden können.

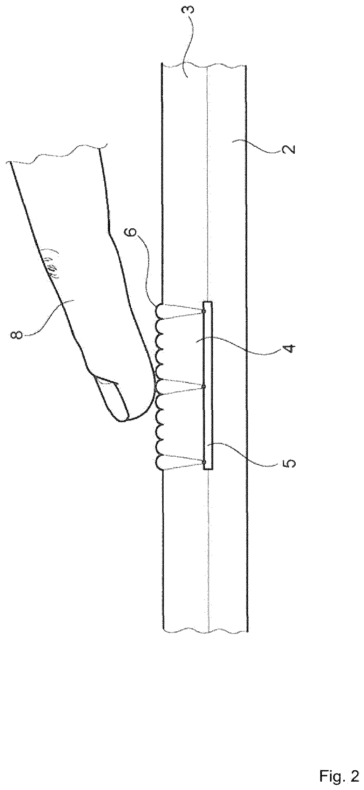

Fig. 2 zeigt für das biometrische Sensorsystem 4 eine weitere Anwendungssituation zum biometrischen Bestimmen, wobei eines biometrisch zu bestimmenden Fingers 8 auf der flächigen Anordnung von optischen Elementen 6 angeordnet ist und im Unterschied zur Anwendungssituation in Fig. 1 ein Gesamtbild des Fingers 8 auf die Sensorfläche 5 abgebildet wird, um mittels der Sensorfläche 3 Sensorsignale für den Fingerabdruck zu erfassen, was in Fig. 2 mittels Hilfslinien B schematisch dargestellt ist. Dieses erfolgt durch die Anordnung optischer Elemente 6 hindurch, indem hierbei das Gesamtbild des Fingerabschnitts detektiert wird.

Die in der vorstehenden Beschreibung, den Ansprüchen sowie der Zeichnung offenbarten Merkmale können sowohl einzeln als auch in beliebiger Kombination innerhalb der Reichweite der Ansprüche für die Verwirklichung der verschiedenen Ausführungen von Bedeutung sein.

### Bezugszeichenliste

- 1: Objekt- oder Körperabschnitt (Gesicht)
- 2: Identitätsdokument
- 3: Schichtaufbau
- 4: biometrisches Sensorsystem
- 5: Sensorfläche
- 6: Anordnung von optischen Elementen
- 7: Anordnung von Mikrolinsen
- 8: Finger
- A, B: Hilfslinien

## Patentansprüche

1. Vorrichtung zum Messen von Bilddaten, aus denen biometrische Daten bestimmbar sind, mit
- einem biometrischen Sensorsystem (4) mit einer Sensoreinrichtung, bei der einer Sensorfläche (5) eine flächige Anordnung von optischen Elementen (6) vorgelagert ist, und
- einer Verarbeitungseinrichtung, die mit der Sensoreinrichtung verbunden und eingerichtet ist, von der Sensoreinrichtung erfasste Sensorsignale zu empfangen und hieraus Bilddaten zu erzeugen, aus denen biometrische Daten zum Identifizieren wenigstens einer Person bestimmbar sind;
wobei die Verarbeitungseinrichtung weiter eingerichtet ist,
- erste Sensorsignale zu empfangen und hieraus erste Bilddaten zu erzeugen, aus denen erste biometrische Daten für ein erstes biometrisches Merkmal bestimmbar sind, wobei die ersten Sensorsignale für einen ersten Körperabschnitt erfassbar sind, der in einem Fokusabstand vor der flächigen Anordnung von optischen Elementen (6) oder benachbart zum Fokusabstand angeordnet ist; und
- zweite Sensorsignale zu empfangen und hieraus zweite Bilddaten zu erzeugen, aus denen zweite biometrische Daten für ein zweites biometrisches Merkmal bestimmbar sind, wobei die zweiten Sensorsignale für einen zweiten Körperabschnitt erfassbar sind, der in einem Nichtfokusabstand vor der flächigen Anordnung von optischen Elementen (6), welcher kürzer als der Fokusabstand ist, oder auf der flächigen Anordnung aufliegend angeordnet ist, und die Sensoreinrichtung eingerichtet ist, durch die flächige Anordnung von optischen Elementen (6) hindurch die zweiten Sensorsignale zu erfassen, die ein Gesamtbild des zweiten Körperabschnitts anzeigen, wodurch ein Erfassen der zweiten Bilddaten für eine unscharfe Abbildung erfolgt.

2. Vorrichtung nach Anspruch 1, **dadurch gekennzeichnet, dass** bei der Sensoreinrichtung der Sensorfläche (5) eine flächige Anordnung von optischen Linsen (7) vorgelagert ist, denen im Fokusabstand eine Fokusebene zugeordnet ist.

3. Vorrichtung nach Anspruch 1 oder 2, **dadurch gekennzeichnet, dass** ein Fokusabstand der flächigen Anordnung von optischen Elementen (6) etwa 50cm bis etwa 70cm beträgt.

4. Vorrichtung nach mindestens einem der vorangehenden Ansprüche, dadurch g e - **kennzeichnet,** dass die Verarbeitungseinrichtung weiter eingerichtet ist, aus den ersten Sensorsignalen erste Bilddaten zu erzeugen, aus denen als erste biometrische Daten Gesichtsbiometrie-Daten bestimmbar sind.

5. Vorrichtung nach mindestens einem der vorangehenden Ansprüche, dadurch g e - **kennzeichnet,** dass die Verarbeitungseinrichtung weiter eingerichtet ist, aus den zweiten Sensorsignalen zweite Bilddaten zu erzeugen, aus denen als zweite biometrische Daten Fingerabdruck-Daten bestimmbar sind.

6. Vorrichtung nach mindestens einem der vorangehenden Ansprüche, dadurch g e - **kennzeichnet,** dass zumindest die Sensoreinrichtung in einem Identitätsdokument (2) angeordnet ist.

7. Vorrichtung nach mindestens einem der vorangehenden Ansprüche, dadurch g e - **kennzeichnet,** dass zumindest die Sensoreinrichtung in einem Kunststoffkartenkörper angeordnet ist.

8. Vorrichtung nach Anspruch 7, **dadurch gekennzeichnet, dass** die flächige Anordnung von optischen Elementen (6) in den Kunststoffkartenkörper einlaminiert ist.

9. Vorrichtung nach mindestens einem der vorangehenden Ansprüche, dadurch g e - **kennzeichnet**, dass mittels der flächigen Anordnung von optischen Elementen (6), wenn der erste Körperabschnitt im Fokusabstand oder benachbart hierzu vor der flächigen Anordnung von optischen Elementen (6) angeordnet ist, Teilbildbereiche des ersten Körperabschnitt auf die Sensorfläche (5) abgebildet werden können und die Verarbeitungseinrichtung eingerichtet ist, aus den ersten Sensorsignalen, die die Teilbildbereiche anzeigen, als erste Bilddaten ein Gesamtbild des ersten Körperabschnitt zu erzeugen.

10. Verfahren zum Messen von Bilddaten, aus denen biometrische Daten bestimmbar sind, das Verfahren aufweisend:
- Bereitstellen eines biometrischen Sensorsystems (4) mit einer Sensoreinrichtung, bei der einer Sensorfläche (5) eine flächige Anordnung von optischen Elementen (6) vorgelagert ist, und einer Verarbeitungseinrichtung, die mit der Sensoreinrichtung verbunden und eingerichtet ist, von der Sensoreinrichtung erfasste Sensorsignalen zu empfangen und hieraus Bilddaten zu erzeugen, aus denen biometrische Daten bestimmbar sind; und
- Erfassen von Sensorsignalen und Erzeugen von Bilddaten aus den Sensorsignalen, aus denen biometrische Daten zum Identifizieren wenigstens einer Person bestimmbar sind, mittels des biometrischen Sensorsystems (4);
wobei die Verarbeitungseinrichtung weiter eingerichtet ist,
- erste Sensorsignale zu empfangen und hieraus erste Bilddaten zu erzeugen, aus denen erste biometrische Daten für ein erstes biometrisches Merkmal bestimmbar sind, wobei die ersten Sensorsignale für einen ersten Körperabschnitt erfasst werden, der in einem Fokusabstand vor der flächigen Anordnung von optischen Elementen (6) oder benachbart zum Fokusabstand angeordnet ist; und
- zweite Sensorsignale zu empfangen und hieraus zweite Bilddaten zu erzeugen, aus denen zweite biometrische Daten für ein zweites biometrisches Merkmal bestimmbar sind, wobei die zweiten Sensorsignale für einen zweiten Körperabschnitt erfasst werden, der in einem Nichtfokusabstand vor der flächigen Anordnung von optischen Elementen (6), welcher kürzer als der Fokusabstand ist, oder auf der flächigen Anordnung aufliegend angeordnet ist, und die Sensoreinrichtung eingerichtet ist, durch die flächige Anordnung von optischen Elementen (6) hindurch die zweiten Sensorsignale zu erfassen, die ein Gesamtbild des zweiten Körperabschnitts anzeigen, wodurch ein Erfassen der zweiten Bilddaten für eine unscharfe Abbildung erfolgt.

## Claims

1. A device for measuring image data from which biometric data can be determined, having
- a biometric sensor system (4) having a sensor device in which a flat arrangement of optical elements (6) is arranged in front of a sensor surface (5), and
- a processing device which is connected to the sensor device and is configured to receive sensor signals detected by the sensor device and to generate image data therefrom, from which image data biometric data for identifying at least one person can be determined;
the processing device further being configured
- to receive first sensor signals and to generate first image data therefrom, from which first image data first biometric data for a first biometric feature can be determined, the first sensor signals being detectable for a first body section which is arranged at a focal distance in front of the flat arrangement of optical elements (6) or adjacent to the focal distance; and
- to receive second sensor signals and to generate second image data therefrom, from which second image data second biometric data for a second biometric feature can be determined, the second sensor signals being detectable for a second body section which is arranged at a non-focal distance in front of the arrangement of optical elements (6), which non-focal distance is shorter than the focal distance, or is arranged to rest on the flat arrangement, and the sensor device being configured to detect the second sensor signals through the flat arrangement of optical elements (6), which second sensor signals display an overall image of the second body section, as a result of which, detection of the second image data takes place for an out-of-focus image.

2. The device according to Claim 1, **characterized in that**, in the sensor device, a flat arrangement of optical lenses (7) is arranged in front of the sensor surface (5), to which lenses a focal plane is assigned at the focal distance.

3. The device according to Claim 1 or 2, **characterized in that** a focal distance of the flat arrangement of optical elements (6) is approximately 50 cm to approximately 70 cm.

4. The device according to at least one of the preceding claims, **characterized in that** the processing device is further configured to generate first image data from the first sensor signals, from which first image data facial biometric data can be determined as first biometric data.

5. The device according to at least one of the preceding claims, **characterized in that** the processing device is further configured to generate second image data from the second sensor signals, from which second image data fingerprint data can be determined as second biometric data.

6. The device according to at least one of the preceding claims, **characterized in that** at least the sensor device is arranged in an identity document (2).

7. The device according to at least one of the preceding claims, **characterized in that** at least the sensor device is arranged in a plastic card body.

8. The device according to Claim 7, **characterized in that** the flat arrangement of optical elements (6) is laminated into the plastic card body.

9. The device according to at least one of the preceding claims, **characterized in that**, when the first body section is arranged in front of the flat arrangement of optical elements (6) at the focal distance or adjacent thereto, image sub-regions of the first body section can be depicted on the sensor surface (5) by means of the flat arrangement of optical elements (6), and the processing device is configured to generate an overall image of the first body section as first image data from the first sensor signals which display the image sub-regions.

10. A method for measuring image data from which biometric data can be determined, the method comprising:
- providing a biometric sensor system (4) having a sensor device in which a flat arrangement of optical elements (6) is arranged in front of a sensor surface (5), and a processing device which is connected to the sensor device and is configured to receive sensor signals detected by the sensor device and to generate image data therefrom, from which image data biometric data can be determined; and
- detecting sensor signals and generating image data from the sensor signals, from which image data biometric data for identifying at least one person can be determined, by means of the biometric sensor system (4);
the processing device further being configured
- to receive first sensor signals and to generate first image data therefrom, from which first image data first biometric data for a first biometric feature can be determined, the first sensor signals being detected for a first body section which is arranged at a focal distance in front of the flat arrangement of optical elements (6) or adjacent to the focal distance; and
- to receive second sensor signals and to generate second image data therefrom, from which second image data second biometric data for a second biometric feature can be determined, the second sensor signals being detected for a second body section which is arranged at a non-focal distance in front of the arrangement of optical elements (6), which non-focal distance is shorter than the focal distance, or is arranged to rest on the flat arrangement, and the sensor device being configured to detect the second sensor signals through the flat arrangement of optical elements (6), which display an overall image of the second body section, as a result of which, detection of the second image data takes place for an out-of-focus image.

## Revendications

1. Dispositif de mesure de données d'images à partir desquelles des données biométriques peuvent être déterminées, comportant
- un système de capteur biométrique (4) comportant un dispositif de capteur, dans lequel un agencement plat d'éléments optiques (6) est situé devant une surface de capteur (5) et
- un dispositif de traitement qui est connecté au dispositif de capteur et est configuré afin de recevoir des signaux de capteur détectés par le dispositif de capteur pour recevoir et ainsi générer des données d'image à partir desquelles des données biométriques permettant d'identifier au moins une personne peuvent être déterminées ;
dans lequel le dispositif de traitement est en outre configuré pour
- recevoir des premiers signaux de capteur et générer à partir de ceux-ci des premières données d'image, à partir desquelles des premières données biométriques pour une première caractéristique biométrique peuvent être déterminées, dans lequel les premiers signaux de capteur peuvent être détectés pour une première section de corps qui est disposée à une distance focale devant l'agencement plat d'éléments optiques (6) ou adjacente à la distance focale ; et
- recevoir des deuxièmes signaux de capteur et, à partir de ceux-ci, générer des deuxièmes données d'image à partir desquelles des deuxièmes données biométriques peuvent être déterminées pour une deuxième caractéristique biométrique, dans lequel les deuxièmes signaux de capteur peuvent être détectés pour une deuxième section de corps, qui est disposée à une distance non focale devant l'agencement plat d'éléments optiques (6), qui est plus courte que la distance focale ou qui repose sur l'agencement plat, et le dispositif de capteur est configuré pour détecter les deuxièmes signaux de capteur à travers l'agencement plat d'éléments optiques (6), qui affichent une image globale de la deuxième section de corps, moyennant quoi les deuxièmes données d'image sont capturées pour une image floue.

2. Dispositif selon la revendication 1, **caractérisé en ce que** dans le dispositif de capteur, la surface du capteur (5) est située devant un agencement plat de lentilles optiques (7), auquel un plan focal est associé à la distance focale.

3. Dispositif selon la revendication 1 ou 2, **caractérisé en ce qu'**une distance focale de l'agencement plat d'éléments optiques (6) est d'environ 50cm à environ 70 cm.

4. Dispositif selon au moins une des revendications précédentes, **caractérisé en ce que** le dispositif de traitement est en outre configuré pour générer des premières données d'image à partir des premiers signaux de capteurs, à partir desquelles des premières données biométriques faciales peuvent être déterminées

5. Dispositif selon au moins une des revendications précédentes, **caractérisé en ce que** le dispositif de traitement est en outre configuré pour générer des deuxièmes données d'image à partir des deuxièmes signaux de capteur, à partir desquelles des données d'empreintes digitales peuvent être déterminées comme deuxièmes données biométriques.

6. Dispositif selon au moins une des revendications précédentes, **caractérisé en ce qu'**au moins le dispositif capteur est disposé dans un document d'identité (2).

7. Dispositif selon une au moins des revendications précédentes, **caractérisé en ce qu'**au moins le dispositif capteur est disposé dans un corps de carte en matière plastique.

8. Dispositif selon la revendication 7, **caractérisé en ce que** l'agencement à plat d'éléments optiques (6) est stratifié dans le corps de carte en matière plastique.

9. Dispositif selon au moins une des revendications précédentes, **caractérisé en ce que** au moyen de l'agencement à plat d'éléments optiques (6), lorsque la première section de corps est disposée à la distance focale ou adjacente à celle-ci devant l'agencement à plat d'éléments optiques (6), des zones d'image partielles de la première section de corps peuvent être imagées sur la surface du capteur (5) et le dispositif de traitement est configuré pour générer une image globale de la première section de corps en tant que premières données d'image provenant des premiers signaux de capteur qui affichent les zones d'image partielles.

10. Procédé de mesure de données d'images à partir desquelles des données biométriques peuvent être déterminées, comprenant le procédé consistant à :
- fournir un système de capteur biométrique (4) comprenant un dispositif de capteur, dans lequel un agencement plat d'éléments optiques (6) est situé devant une surface de capteur (5), et un dispositif de traitement qui est connecté au dispositif de capteur et est configuré pour recevoir des signaux de capteur détectés par le dispositif de capteur et générer à partir de ceux-ci des données d'image à partir desquelles des données biométriques peuvent être déterminées ; et
- détecter des signaux de capteur et générer des données d'image à partir des signaux de capteur, à partir desquelles des données biométriques permettant d'identifier au moins une personne peuvent être déterminées, au moyen du système de capteur biométrique (4) ;
dans lequel le dispositif de traitement est en outre configuré pour
- recevoir des premiers signaux de capteur et générer à partir de ceux-ci des premières données d'image à partir desquelles des premières données biométriques pour une première caractéristique biométrique peuvent être déterminées, dans lequel les premiers signaux de capteur sont détectés pour une première section du corps, qui est disposée à une distance focale devant l'agencement plat d'éléments optiques (6) ou adjacente à la distance focale ; et
- recevoir des deuxièmes signaux de capteur et, à partir de ceux-ci, générer des deuxièmes données d'image à partir desquelles des deuxièmes données biométriques pour une deuxième caractéristique biométrique peuvent être déterminées, dans lequel les deuxièmes signaux de capteur peuvent être détectés pour une deuxième section de corps, qui est disposée à une distance non focale devant l'agencement plat d'éléments optiques (6), qui est plus courte que la distance focale ou qui repose sur l'agencement plat, et le dispositif de capteur est configuré pour détecter les deuxièmes signaux de capteur à travers l'agencement plat d'éléments optiques (6), qui affichent une image globale de la deuxième section de corps, moyennant quoi les deuxièmes données d'image sont capturées pour une image floue.
